# EUROPÄISCHE PATENTSCHRIFT

(11) **EP 1 279 291 B1**
(45) Veröffentlichungstag und Bekanntmachung des Hinweises auf die Patenterteilung: **06.10.2004**
(21) Anmeldenummer: 01940135.5
(22) Anmeldetag: 09.04.2001
(51) Int. Cl.: H04N 7/26

(54) **VERFAHREN UND VORRICHTUNG ZUM SPEICHERN UND BEARBEITEN VON BILDINFORMATION ZEITLICH AUFEINANDERFOLGENDER BILDER**
METHOD AND DEVICE FOR STORING AND PROCESSING IMAGE INFORMATION OF TEMPORALLY SUCCESSIVE IMAGES
PROCEDE ET DISPOSITIF DE MISE EN MEMOIRE ET DE TRAITEMENT D'INFORMATIONS D'IMAGES SUCCESSIVES DANS LE TEMPS

(30) Priorität: 14.04.2000 DE 10018662
(43) Veröffentlichungstag der Anmeldung: 29.01.2003
(73) Patentinhaber: SIEMENS AKTIENGESELLSCHAFT, 80333 München (DE)
(72) Erfinder: BAESE, Gero, 81371 München (DE); BUSCHMANN, Ralf, 82538 Geretsried (DE); HUTTER, Andreas, 81539 München (DE); KUTKA, Robert, 82269 Geltendorf (DE); OERTEL, Norbert, 81737 München (DE); PANDEL, Jürgen, 83620 Feldkirchen-Westerham (DE)
(86) Internationale Anmeldenummer: PCT/DE2001/001393
(87) Internationale Veröffentlichungsnummer: WO 2001/080569

(56) Entgegenhaltungen:
- EP-A- 0 606 675
- EP-A- 0 849 950
- US-A- 4 636 862
- US-A- 5 802 211

## Beschreibung

Die Erfindung betrifft ein Verfahren sowie eine Vorrichtung zum Speichern und Bearbeiten von Bildinformation zeitlich aufeinanderfolgender Bilder.

Ein solches Verfahren und eine solche Vorrichtung sind aus [1] bekannt. Bei dieser bekannten Vorgehensweise wird eine Bewegungsschätzung für Bildinformation aus Bildbereichen mehrerer zeitlich vorangegangener Bilder genutzt. Mehrere Vorgängerbilder werden zur Bewegungsschätzung herangezogen, um eine größere Auswahl von Bildbereichen zur Verfügung zu stellen, wodurch die Bewegungsschätzung und damit verbunden eine Bewegungskompensation oder auch einer Fehlerverdeckung verbessert wird.

Dies erklärt sich beispielsweise daraus, dass bei frei werdendem Hintergrund in einem Bild zwischen dem zu codierenden oder allgemein zu bearbeitenden Bild und dessen unmittelbar zeitlich vorangegangenen Bild bei Berücksichtigung lediglich dieser beiden Bilder eine Bewegungsschätzung sehr fehlerbehaftet ist. Werden jedoch mehrere Vorgängerbilder im Rahmen der Bewegungsschätzung oder der Fehlerverdeckung berücksichtigt, so besteht die Möglichkeit, diese Bildbereiche des frei werdenden Hintergrunds aus früheren, zeitlich vorangegangenen Bildern, zu replizieren.

Üblicherweise wird bei sogenannten prädiktiven Codierverfahren, das heißt bei Codierverfahren, in denen eine sogenannte Bewegungsschätzung durchgeführt wird, aus bereits übertragener Bildinformation aus Bildbereichen die aktuelle Bildinformation geschätzt und es wird nur noch ein sogenannter Schätzfehler, der sich als Ergebnis der Bewegungsschätzung ergibt, übermittelt. Je genauer diese Bewegungsschätzung ist, desto effektiver kann die Folge zeitlich aufeinander folgender Bilder, im weiteren auch als Bildfolge bezeichnet, komprimiert werden. Bisher war es üblich, die Bewegungsschätzung nur auf das unmittelbar zeitlich vorangegangene Bild anzuwenden. Bewegen sich Objekte vor einem Hintergrund des Bildes, so kann der frei werdende Hintergrund nicht aus dem unmittelbar zeitlich vorangegangenen Vorgängerbild prädiziert werden, sondern er muß vollständig neu codiert werden. Dadurch sinkt die Effizienz der Bildkompression und die erforderliche Datenrate zur Übertragung der Bildfolge bei gleichbleibender Qualität steigt.

Bei der aus [1] bekannten Vorgehensweise werden die gesamten Vorgängerbilder, die im Rahmen der Bewegungsschätzung über mehrere zeitlich vorangegangene Bilder hinweg berücksichtigt werden, vollständig gespeichert. Dies führt zu einem erheblichen Speicherplatzbedarf, insbesondere in Anwendungen, in denen nur ein relativ geringer Speicherplatz zur Verfügung steht, beispielsweise in der Videotelefonie. Es wird bei dieser bekannten Vorgehensweise ein Mehrfaches des üblicherweise zur Bildcodierung zur Verfügung stehenden Speicherplatzes benötigt, um die erforderliche Bildinformation der Vielzahl zeitlich vorangegangener Bilder zu speichern.

Die Druckschriften [2] und [3] betreffen Verfahren zur Codierung und Übertragung von Videobildinformation, wobei die Videobilder zunächst in einem Speicher gepuffert werden und aus den einzelnen Videobildern individuelle Objekte extrahiert werden, die für eine anschließende Bewegungsschätzung verwendet werden.

In Druckschrift [4] ist ein solches Verfahren offenbart, das mit Sprites arbeitet.

Somit liegt der Erfindung das Problem zugrunde, Bildinformation zeitlich aufeinander folgender Bilder zu speichern und zu bearbeiten, wobei die Qualität einer Bewegungsschätzung oder einer Fehlerverdeckung ähnlich der ist, wie bei der aus [1] bekannten Vorgehensweise, jedoch der Speicherplatzbedarf zum Speichern der Vielzahl zeitlich vorangegangener Bilder verringert wird.

Das Problem wird durch das Verfahren, die Vorrichtung, das Computerlesbare Speichermedium sowie das Computerprogramm-Element mit den Merkmalen gemäß den unabhängigen Patentansprüchen gelöst.

Bei einem Verfahren zum Speichern und Verarbeiten von Bildinformation zeitlich aufeinander folgender Bilder wird aus jedem berücksichtigten zeitlich vorangegangenen Bild jeweils mindestens ein Bildbereich ausgewählt. Die aus jedem ausgewählten Bildbereich ermittelte Bildinformation wird mit einer Zuordnungsinformation, mit der eine Zuordnung des jeweiligen Bildbereichs und damit auch der Bildinformation des jeweiligen Bildbereichs zu dem entsprechenden Bild und zu der Position des Bildbereichs innerhalb des entsprechenden Bildes möglich ist, gespeichert. Aus der Bildinformation der jeweils gespeicherten, ausgewählten Bildbereiche wird unter Berücksichtigung der Zuordnungsinformation mindestens ein Mischbild gebildet und die Zuordnungsinformationen werden einer Einheit zur Decodierung zugeführt. Das Mischbild wird im Rahmen einer Bewegungsschätzung oder einer Bewegungskompensation oder einer Fehlerverdeckung für ein Bild verwendet.

Eine Vorrichtung zum Speichern und Bearbeiten von Bildinformation zeitlich aufeinanderfolgender Bilder weist einen Prozessor auf, der derart eingerichtet ist, daß folgende Schritte durch geführt werden:
- aus jedem berücksichtigten zeitlich vorangegangenen Bild wird jeweils mindestens ein Bildbereich ausgewählt,
- Bildinformation aus jedem ausgewählten Bildbereich wird mit einer Zuordnungsinformation, mit der eine Zuordnung des jeweiligen Bildbereichs zu dem entsprechenden Bild und zu der Position des Bildbereichs innerhalb des Bildes möglich ist, gespeichert,
- aus der Bildinformation wird aus den gespeicherten ausgewählten Bildbereichen mindestens ein Mischbild gebildet unter Berücksichtigung der jeweiligen Zuordnungsinformation,
- die Zuordnungsinformationen werden einer Einheit zur Decodierung zugeführt,
- das Mischbild wird im Rahmen einer Bewegungsschätzung, einer Bewegungskompensation oder einer Fehlerverdeckung für ein Bild verwendet.

In einem Computerlesbaren Speichermedium ist ein Computerprogramm zum Speichern und Bearbeiten von Bildinformation zeitlich aufeinander folgender Bilder gespeichert, das, wenn es ausgeführt wird, folgende Verfahrensschritte aufweist:
- aus jedem berücksichtigten zeitlich vorangegangenen Bild wird jeweils mindestens ein Bildbereich ausgewählt,
- Bildinformation aus jedem ausgewählten Bildbereich wird mit einer Zuordnungsinformation, mit der eine Zuordnung des jeweiligen Bildbereichs zu dem entsprechenden Bild und zu der Position des Bildbereichs innerhalb des Bildes möglich ist, gespeichert,
- aus der Bildinformation wird aus den gespeicherten ausgewählten Bildbereichen mindestens ein Mischbild gebildet unter Berücksichtigung der jeweiligen Zuordnungsinformation,
- die Zuordnungsinformationen werden einer Einheit zur Decodierung zugeführt,
- das Mischbild wird im Rahmen einer Bewegungsschätzung, einer Bewegungskompensation oder einer Fehlerverdeckung für ein Bild verwendet.

Ein Computerprogramm-Element zum Speichern und Bearbeiten von Bildinformation zeitlich aufeinanderfolgender Bilder weist folgende Verfahrensschritte auf, wenn es ausgeführt wird:
- aus jedem berücksichtigten zeitlich vorangegangenen Bild wird jeweils mindestens ein Bildbereich ausgewählt,
- Bildinformation aus jedem ausgewählten Bildbereich wird mit einer Zuordnungsinformation, mit der eine Zuordnung des jeweiligen Bildbereichs zu dem entsprechenden Bild und zu der Position des Bildbereichs innerhalb des Bildes möglich ist, gespeichert,
- aus der Bildinformation wird aus den gespeicherten ausgewählten Bildbereichen mindestens ein Mischbild gebildet unter Berücksichtigung der jeweiligen Zuordnungsinformation,
- die Zuordnungsinformationen werden einer Einheit zur Decodierung zugeführt,
- das Mischbild wird im Rahmen einer Bewegungsschätzung, einer Bewegungwskompensation oder einer Fehlerverdeckung für ein Bild verwendet.

Da es möglich ist, nicht mehr die gesamten zeitlich vorangegangenen Bilder zu speichern, sondern Bildbereiche zeitlich vorangegangener Bilder auszuwählen und zu speicheren, wird eine erhebliche Reduktion des benötigten Speicherplatzbedarfs erreicht.

Trotzdem bleibt die erreichbare Qualität der Bewegungsschätzung im wesentlichen gleich der Qualität, die mit dem aus [1] bekannten Verfahren erreicht werden kann.

Anschaulich kann die Erfindung darin gesehen werden, dass vorzugsweise relevante Bereiche für die Bewegungsschätzung berücksichtigter zeitlich vorangegangener Bilder gespeichert werden, anstatt die gesamte Bildinformation zeitlich vorangegangener Bilder zur Bewegungsschätzung über eine Vielzahl zeitlich vorangegangener Bilder zu speichern.

Die Erfindung kann sowohl mittels eines Computerprogramms, das heißt in Software, realisiert werden, als auch mittels einer speziellen elektronischen Schaltung in Hardware.

Bevorzugte Weiterbildungen der Erfindung ergeben sich aus den abhängigen Ansprüchen.

Die im weiteren beschriebenen Ausgestaltungen betreffen sowohl das Verfahren, die Vorrichtung, das Computerlesbare Speichermedium als auch das Computerprogramm-Element.

In einer Weiterbildung der Erfindung ist es vorgesehen, einen Bildbereich dann auszuwählen, wenn sich die Bildinformation in dem entsprechenden Bildbereich hinsichtlich eines vorgegebenen Kriteriums zur Bewegungsschätzung zweier zeitlich aufeinander folgender Bilder in ausreichender Weise eignet, das heißt, wenn die Bildinformation ein vorgegebenes Kriterium erfüllt.

In einer weiteren Ausgestaltung der Erfindung ist es vorgesehen, mehrere aufeinanderfolgende zeitlich vorangegangene Bilder zu verwenden, um aus diesen Bildern Bildbereiche auszuwählen und zu speichern.

Die Bildinformation kann in einer Ringspeicher-Struktur gespeichert werden, das heißt, es kann ein Speicherplatz vorgegebener Größe zur Verfügung gestellt werden zum Speichern der Bildinformation zeitlich vorangegangener Bilder und für den Fall, daß der zur Verfügung gestellte Speicherbereich gefüllt ist, können entsprechend Bildbereiche, das heißt die Bildinformation der entsprechenden Bildbereiche, durch "aktuellere" Bildinformation überschrieben werden.

Dies kann dadurch erfolgen, daß die Bildinformation, die die längste Zeit in dem Speicher gespeichert ist, durch die aktuellere, neu zu speichernde Bildinformation überschrieben wird.

Alternativ kann die Bildinformation ersetzt werden, die im Rahmen der Bewegungsschätzung, Bewegungskompensation oder der Fehlerverdeckung am seltensten ausgewählt wurde, da diese Bildinformation sich aus heuristischer Sicht nicht in ausreichender Weise für die Bewegungsschätzung eignet und somit auch nicht mehr gespeichert bleiben muss.

Mit dieser Weiterbildung kann ein deterministisch vorgegebener Speicherplatzbedarf gewährleistet werden, der erheblich unter dem Speicherplatzbedarf bei der aus [1] bekannten Vorgehensweise liegt.

Auf das mindestens eine Mischbild kann bezüglich des zu bearbeitenden Bildes eine Bewegungsschätzung durchgeführt werden.

Weiterhin können mehrere Mischbilder aus der Bildinformation aus Bildbereichen mehrerer zeitlich vorangegangener Bilder gebildet werden und für jedes Mischbild kann eine Bewegungsschätzung bezüglich des Bildes durchgeführt werden.

Es wird gemäß dieser Weiterbildung das Mischbild ausgewählt, für das die Bewegungsschätzung bezüglich eines vorgegebenen Kriteriums ein bestes Ergebnis liefert. Für die Bildbereiche des ausgewählten Mischbildes werden die Bewegungsvektoren gebildet, die schließlich im Rahmen der Bewegungskompensation oder der Fehlerverdeckung verwendet werden können.

Die Mischbilder können iterativ für jedes berücksichtigte zeitlich vorangegangene Bild sukzessive ausgehend von dem Bild, für das die Weiterverarbeitung vorgesehen ist, gebildet werden.

Dies kann erfolgen, indem die gespeicherte Bildinformation jeweils eines zeitlich vorangegangenen Bildes in ein Mischbild kopiert wird und das sich ergebende Mischbild gespeichert wird. Die gespeicherte Bildinformation jeweils eines zeitlich vorangegangenen Bildes wird in das sich in dem vorangegangenen Schritt ergebende Mischbild kopiert. Das Verfahren wird für jedes zu bildende Mischbild sukzessive weitergeführt, bis alle zeitlich vorangegangenen Bilder berücksichtigt worden sind.

Der auszuwählende Bildbereich kann allgemein eine beliebige Form aufweisen, vorzugsweise jedoch weist das Bildobjekt eine vorgebbare Form auf oder ist ein Makroblock oder ein Bildblock.

Durch diese Weiterbildung wird es möglich, das Verfahren in übliche blockbasierte und/oder objektbasierte Bildcodierungsverfahren ohne weiteres einzusetzen.

Die Erfindung kann sowohl im Rahmen der Bildtelefonie als auch im digitalen Fernsehen oder im sogenannten HDTV eingesetzt werden. Ferner kann die Erfindung vorteilhaft eingesetzt werden beim Internet-Video-Streaming, im Bereich des Video on Demand, im Business Fernsehen, oder im Internet Fernsehen.

Es ist darauf hinzuweisen, dass die Erfindung im Rahmen jedes Bildcodierverfahrens eingesetzt werden kann, bei dem eine Bewegungsschätzung durchgeführt wird,das heißt bei jedem prädiktiven Bildcodierverfahren.

In einer weiteren Ausgestaltung ist es vorgesehen, die Bildinformation aus jedem ausgewählten Bildbereich und/oder die zugehörige Zuordnungsinformation vor dem Speichern zu komprimieren.

Ein Ausführungsbeispiel der Erfindung ist in den Figuren dargestellt und wird im weiteren näher erläutert.

Es zeigen
- Figur 1: eine Skizze, in der das Prinzip der Vorgehensweise gemäß einem Ausführungsbeispiel der Erfindung dargestellt ist;
- Figur 2: eine Codieranordnung gemäß einem Ausführungsbeispiel der Erfindung;
- Figur 3: ein Ablaufdiagramm, in dem die einzelnen Verfahrensschritte des Verfahrens gemäß einem Ausführungsbeispiel der Erfindung dargestellt sind;
- Figur 4: eine Decodieranordnung gemäß einem Ausführungsbeispiel der Erfindung;

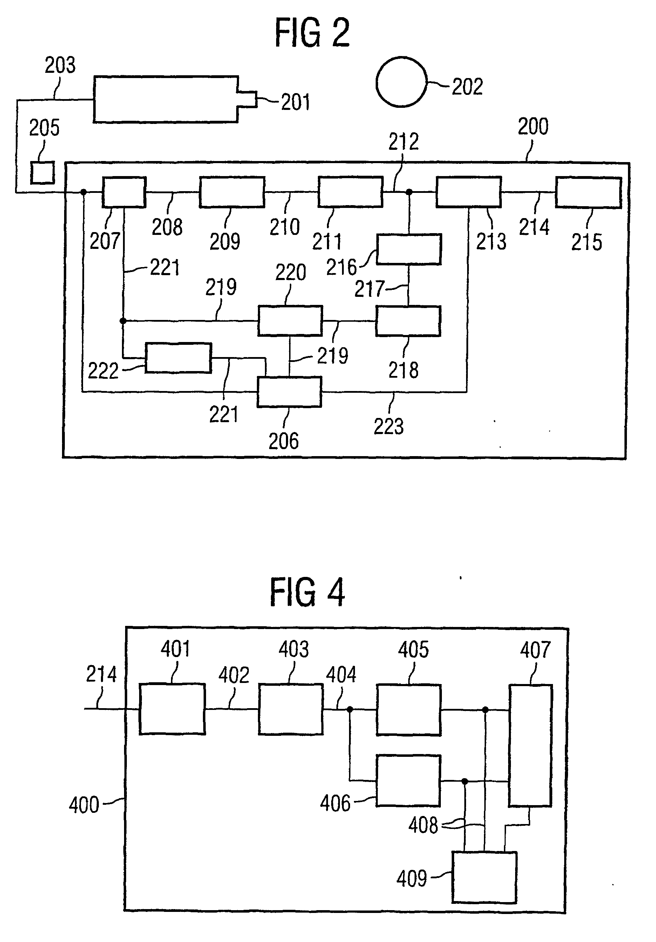

**Fig.2** zeigt eine Codieranordnung 200 mit einer Kamera 201, die Bilder eines Benutzers 202 der Codieranordnung 200 aufnimmt. Die Kamera 201 ist über eine Leitung 203 mit einem Quellencoder 204 verbunden. In dem Quellencoder 204 werden die von der Kamera aufgenommenen und digitalisierten Videobilder gemäß der im weiteren beschriebenen Vorgehensweise quellencodiert.

Die einzelnen Videobilder weisen Bildpunkte auf, denen Codierungsinformation, beispielsweise Farbinformation oder Helligkeitsinformation, zugeordnet ist. Die Bildpunkte sind in Bildblöcke 205 gruppiert, welche wiederum in sogenannte Makroblöcke gruppiert sind.

Bildblöcke 205 eines zu codierenden Bildes werden dem Quellencoder 204 zugeführt. In dem Quellencoder 204 werden die Bildblöcke 205 einer Einheit zur Bewegungsschätzung 206 sowie einer Schaltereinheit 207 zugeführt. Über die Schaltereinheit 207 wird bestimmt, gesteuert von einer nicht dargestellten Steuereinheit, ob für den Bildblock eine Bewegungsschätzung durchgeführt wird und somit eine Differenzbildinformation 208 zwischen Codierinformation des zu codierenden Bildblocks und eines Bildblocks eines zeitlich vorangegangenen Bildes erzeugt werden soll, oder ob die vollständige Codierinformation 208 des zu codierenden Bildblocks 205 über die Schaltereinheit 207 einer Transformationseinheit 209 zugeführt werden soll.

In der Transformationseinheit 207 wird eine **D**iskrete **C**osinus**t**ransformation (DCT) auf die zu codierende Codierungsinformation bzw. die Differenzcodierungsinformation ausgeführt, wodurch Transformationskoeffizienten 210 gebildet werden, die in einer Quantisierungseinheit 211 zu quantisierten Transformationskoeffizienten 212 quantisiert werden.

Die quantisierten Transformationskoeffizienten 212 werden einer Einheit zur Lauflängencodierung 213 zugeführt. Die lauflängencodierten Transformationskoeffizienten 214 werden in einen Ausgangspuffer 215 geschrieben. Aus dem Ausgangspuffer 215 werden die lauflängencodierten Transformationskoeffizienten 214 ausgelesen und beispielsweise einer Kanalcodierung zugeführt und an einen Empfänger gesendet.

Die quantisierten Transformationskoeffizienten 212 werden ferner in einer Rückkoppelschleife einer inversen Quantisierungseinheit 216 zugeführt, wo sie invers quantisiert werden zu invers quantisierten Transformationskoeffizienten 217.

Die invers quantisierten Transformationskoeffizienten 217 werden einer inversen Transformationseinheit 218 zugeführt, wo die invers quantisierten Transformationskoeffizienten 217 einer Inversen Diskreten Cosinustransformation (IDCT) unterzogen werden, wodurch invers transformierte Koeffizienten 219 gebildet werden, die in einem ersten Speicher 220 gespeichert werden.

In der Einheit zur Bewegungsschätzung 206 wird unter Verwendung der in dem ersten Speicher 220 gespeicherten invers transformierten Koeffizienten 219 eine Bewegungsschätzung durchgeführt.

Nach erfolgter Bewegungsschätzung wird gemäß diesem Ausführungsbeispiel entschieden, ob ein Bildblock sich gut für eine Bewegungsschätzung eignet oder nicht.

Dies erfolgt, wie im weiteren beschrieben wird, durch Analyse einer Vielzahl von Bildern und dem Prüfen, ob sich ein jeweiliger Bildblock für eine Bewegungsschätzung eignet, das heißt einen statistisch geringen Fehlerwert im Rahmen der Bewegungsschätzung verursachen kann und damit eine niedrige Datenrate statistisch gewährleisten kann.

Dies ist beispielsweise der Fall für Bildblöcke, die einen frei werdenden Hintergrund beschreiben, das heißt Bildblöcke, die ein Objekt beschreiben, das sich zwischen zeitlich aufeinander folgenden Bildern stark bezüglich seiner Position innerhalb der Bilderfolge verändert. Die ausgewählten Bildblöcke, das heißt die Bildinformation der ausgewählten Bildblöcke werden in einem zweiten Speicher 222 gespeichert.

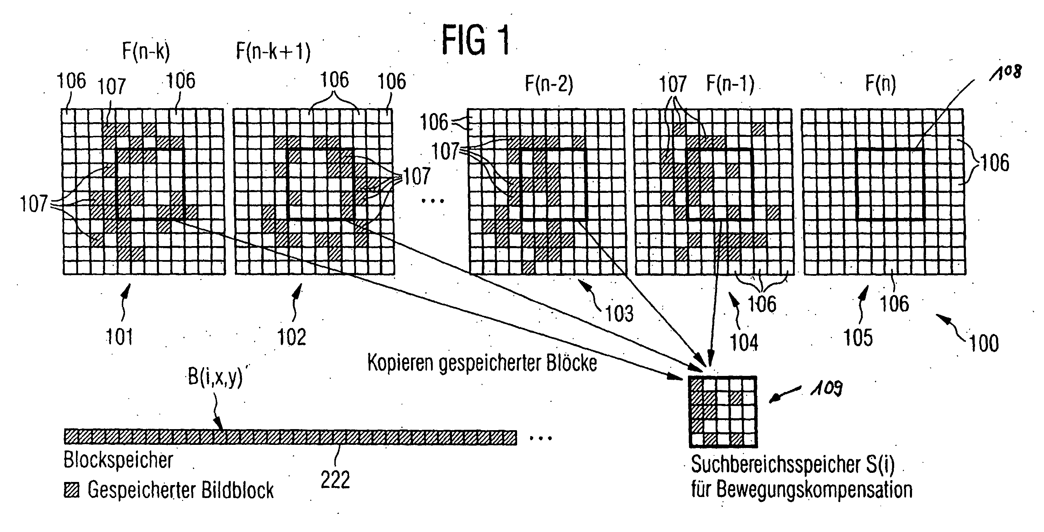

Diese Vorgehensweise wird anhand von Fig.1 im weiteren näher erläutert.

Die sich im Rahmen der Bewegungsschätzung ergebenden Bewegungsvektoren 223 werden der Einheit zur Lauflängencodierung 213 zugeführt und dort lauflängencodiert und weiterverarbeitet.

**Fig.1** zeigt eine Folge 100 digitalisierter Bilder 101, 102, 103, 104, 105. Gemäß diesem Ausführungsbeispiel wird mit F(n) das aktuelle zu codierende Bild, für das eine Bewegungsschätzung durchgeführt werden soll, bezeichnet. Das zeitlich am weitesten vorangegangene Bild, welches im Rahmen des im weiteren beschriebenen Verfahren berücksichtigt wird, wird mit F(n-k) bezeichnet. Dies bedeutet, dass im Rahmen des Verfahrens zur Bewegungsschätzung k zeitlich vorangegangene Bilder berücksichtigt werden.

Die Bilder weisen Bildblöcke 106 auf. Ausgewählte Bildblöcke werden mit den Bezugszeichen 107 gekennzeichnet. Codierungsinformation der ausgewählten Bildblöcke 107 werden in dem zweiten Speicher 222 gemeinsam mit einer Zuordnungsinformation gespeichert. Die Zuordnungsinformation enthält eine Angabe über das Bild, in dem sich der ausgewählte Bildblock befindet und eine Koordinatenangabe, mit der die Position des ausgewählten Bildblocks innerhalb des entsprechenden Bildes eindeutig beschrieben wird.

Die Zuordnungsinformation wird bezeichnet mit B(i, x, y), wobei
- mit i das jeweilige Bild bezeichnet wird, in dem sich der ausgewählte Bildblock befindet,
- mit x eine x-Koordinatenangabe bezeichnet wird, mit der die Position bezüglich der x-Koordinate innerhalb des ausgewählten Bildblocks innerhalb des entsprechenden zeitlich vorangegangenen Bildes angegeben wird, und
- mit y eine y-Koordinatenangabe bezeichnet wird, mit der die Position bezüglich der y-Koordinate innerhalb des ausgewählten Bildblocks innerhalb des entsprechenden zeitlich vorangegangenen Bildes angegeben wird.

Der zweite Speicher 222 weist eine Ringspeicher-Struktur auf, wie dies in Fig.1 angedeutet ist.

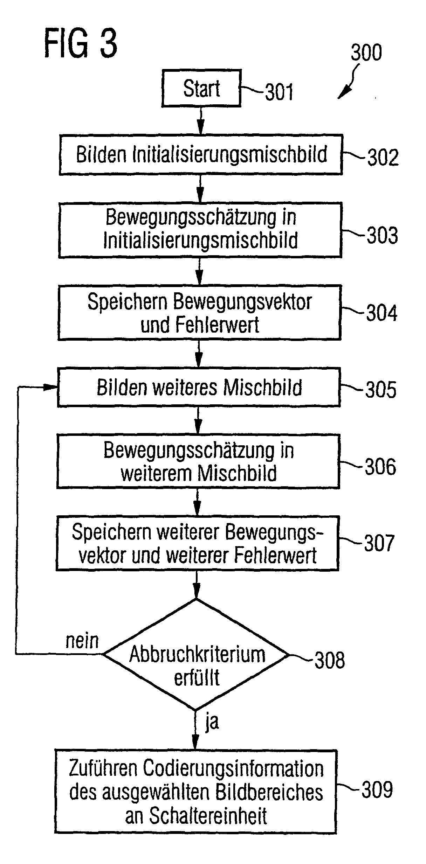

Wird durch die Einheit zur Bewegungsschätzung 207 eine Bewegungsschätzung durchgeführt, so erfolgt dies auf die in **Fig.3** dargestellte Weise innerhalb eines Suchbereichs 108.

**Fig.3** zeigt die einzelnen Verfahrensschritte des Verfahrens zur Bewegungsschätzung 300 gemäß diesem Ausführungsbeispiel.

In einem ersten Schritt (Schritt 301) wird das Verfahren gestartet.

In einem weiteren Schritt wird für den Suchbereich 108 ein Initialisierungsmischbild 109 gebildet aus Codierungsinformation von Bildblöcken ausschließlich des zeitlich unmittelbar vorangegangenen Bildes (Schritt 302). Diese Information steht vollständig zur Verfügung, wodurch gewährleistet ist, dass Codierungsinformation in dem gesamten Suchbereich für die Bewegungsschätzung zur Verfügung steht.

Für den entsprechenden zu codierenden Bildblock wird innerhalb des Suchbereichs 108 in dem Initialisierungsmischbild 109 eine Bewegungsschätzung durchgeführt (Schritt 303), wodurch ein erster Bewegungsvektor gebildet wird. Ergebnis der Bewegungsschätzung ist weiterhin ein Fehlerwert, mit dem angegeben wird, wie stark sich die Codierungsinformationen in dem ausgewählten Bereich innerhalb des Suchbereichs in dem Initialisierungsmischbild 302 gegenüber dem der Codierungsinformation in dem zu codierenden Bildblock unterscheidet. Dies kann beispielsweise durch Bilden der Summe der quadratischen Differenzen der einzelnen Codierungsinformationen der berücksichtigten Bildpunkte erfolgen.

Der Fehlerwert sowie der zugehörige Bewegungsvektor werden gespeichert (Schritt 304).

In einem weiteren Schritt (Schritt 305) wird ein zweites Mischbild 109 gebildet, indem die ausgewählten Bildblöcke des zeitlich nächsten vorangegangenen Bildes F(n-1), die sich in dem ausgewählten Suchbereich 108 befinden, in das Initialisierungsmischbild 109 kopiert werden und an der entsprechenden Position die Codierungsinformation der Bildblöcke des Initialisierungsmischbild überschreiben.

Auf das weitere Mischbild wird nun eine Bewegungsschätzung wiederum hinsichtlich des zu codierenden Bildes durchgeführt (Schritt 306) und es wird ein zweiter Bewegungsvektor gebildet und ein zweiter Fehlerwert, welche wiederum gespeichert werden (Schritt 307).

In einem Prüfschritt (Schritt 308) wird geprüft, ob ein Abbruchkriterium erfüllt ist.

Das Abbruchkriterium gemäß diesem Ausführungsbeispiel ist, ob der Fehlerwert oder der zweite Fehlerwert kleiner ist als ein vorgegebener Schwellenwert.

Ist weder der Fehlerwert noch der zweiter Fehlerwert kleiner als der vorgegebene Schwellenwert, so wird ein drittes Mischbild auf gleiche Weise gebildet wie das weitere Mischbild, iterativ durch Überschreiben der ausgewählten Bildblöcke des zeitlich dritten vorangegangenen Bildes, deren Bildblöcke sich in dem Suchbereich befinden.

Allgemein wird jeweils, wenn geprüft wird, ob das Abbruchkriterium erfüllt ist, und sich ergibt, dass das Abbruchkriterium nicht erfüllt ist, ein Mischbild einer weiteren Iteration durch Überschreiben von Codierungsinformation eines zeitlich vorangegangenen Mischbildes durch Codierungsinformation aus Bildblöcken eines weiteren zeitlich weiter vorangegangenen Bildes, deren Bildblöcke sich in dem Suchbereich befinden, gebildet und es wird jeweils wiederum eine Bewegungsschätzung auf das Mischbild der nächsten Iteration durchgeführt, wodurch ein Bewegungsvektor der jeweils nächsten Iteration und ein weiterer Fehlerwert der nächsten Iteration gebildet wird und wiederum der Prüfschritt (Schritt 308), nunmehr insbesondere auf den Fehlerwert der nächsten Iteration angewendet wird. Ist das Abbruchkriterium erfüllt, so wird der entsprechende gebildete weitere Bewegungsvektor sowie die Angabe, in welcher Iteration des entsprechenden Mischbildes dieser Bewegungsvektor ermittelt wurde, der Einheit zur Lauflängencodierung 213 zugeführt.

Weiterhin wird die Codierungsinformation des entsprechenden ausgewählten Bildbereichs in dem Suchbereich als ausgewählter Bildblock zur Differenzbildung der Schaltereinheit 207 zugeführt (Schritt 309).

Ist der vorgegebene Speicherbereich des zweiten Speichers 222 voll, so werden weitere Codierungsinformationen weiterer, akutellerer ausgewählte Bildblöcke, die lauflängencodierten Bewegungsvektoren und die entspreche Zuordnungsinformation ebenfalls lauflängendecodiert (nicht dargestellt) und in dem ersten Speicher 220 gespeichert, wodurch gespeicherte Codierungsinformationen, die am längsten nicht mehr im Rahmen der Bewegungsschätzung verwendet worden sind, überschrieben werden.

Die lauflängencodierten Bewegungsvektoren, Mischbildindizes sowie die lauflängencodierten Transformationskoeffizienten werden von einem Empfänger empfangen und dort einer Einheit zur Decodierung 400 (vgl. **Fig.4**) zugeführt.

Die lauflängencodierten Transformationskoeffizienten 214 werden einer Einheit zur inversen Quantisierungseinheit 401 zugeführt, wodurch invers quantisierte Transformationskoeffizienten 402 gebildet werden.

Die invers quantisierten Transformationskoeffizienten 402 werden einer inversen Transformationseinheit 403 zugeführt, in der durch Ausführen einer inversen diskreten Cosinustransformation invers transformierte Koeffizienten 404 gebildet werden und in einem ersten Speicher 405 gespeichert werden.

Unter Verwendung der ermittelten Bewegungsvektoren und der rekonstruierten Bilder im Rahmen der Decodierung wird jeweils das entsprechende erforderliche Mischbild in einem zweiten Speicher 406 gespeichert.

In einer Einheit zur Bewegungskompensation 407 erfolgt mittels des entsprechenden Bewegungsvektors und des Mischbildes eine Rekonstruktion des erforderlichen Bildblocks, das heißt der Codierungsinformation des entsprechenden Bildblocks, welche als Differenzinformation 408 einer Addiereinheit 409 zugeführt wird und entsprechend der rekonstruierten Differenzcodierungsinformation addiert wird.

Auf diese Weise wird das rekonstruierte Bild mittels einer Folge rekonstruierter Bildblöcke erzeugt.

Im weiteren werden einige Alternativen zu dem oben dargestellten Ausführungsbeispiel beschrieben.

Es sind unterschiedliche Möglichkeiten vorgesehen, um die relevanten Bildblöcke auszuwählen, die in dem zweiten Speicher 222 gespeichert werden. So können diejenigen Bildblöcke ausgewählt werden, deren Codierungsinformation sich deutlich gegenüber dem entsprechenden Bildblock des vorangegangenen Bildes verändert hat, das heißt deren Codierungsinformationsdifferenz größer ist als ein vorgegebener zweiter Schwellenwert.

Ein weiteres Auswahlkriterium kann sein, dass sogenannte intra-codierte Bildblöcke ausgewählt werden, das heißt Bildblöcke, deren Codierungsinformation vollständig codiert worden ist, und nicht nur als Differenzbildblöcke.

Diese Vorgehensweise eignet sich insbesondere für den Fall, dass nicht das gesamte Bild intra-codiert wird, sondern nur Teile des Bildes.

Die Erfindung eignet sich ebenfalls für eine Fehlerverdeckung, das heißt für eine Fehlerverdeckung in der Codervorrichtung.

Bei dieser alternativen Ausführungsform wird gemäß dem in **Fig.3** dargestellten Verfahren das empfangene Bild mit entsprechenden Mischbildern rekonstruiert und es wird für einen fehlerhaften Bildblock, für den nicht bekannt ist, wie er zu decodieren ist, ein entsprechender Bildblock aus einem der Mischbilder zeitlich vorangegangener Bilder ausgewählt und in den entsprechenden fehlerbehafteten Bildbereich geschrieben.

Weiterhin ist es möglich, den zweiten Speicher durch typische Bildmuster vorzubelegen, was im wesentlichen einer Vektorquantisierung gleicht. Als solche Bildmuster können z.B. flächige, hautfarbene Bilblöcke dienen oder auch offene bzw. geschlossene Augen, die anschaulich als Codebuch im Rahmen einer Vektorquantisierung dienen, verwendet werden.

In diesem Dokument ist folgende Veröffentlichung zitiert:
[1] ITU-T H.263+, Annex N
[2] US-A-5 802 211
[3] EP 0 606 675 A2
[4] EP 0 849 950 A2

## Patentansprüche

1. Verfahren zum Speichern und Bearbeiten von Bildinformation zeitlich aufeinanderfolgender Bilder (101, ..., 105),
• bei dem aus jedem berücksichtigten zeitlich vorangegangenen Bild (F(n-k)) jeweils mindestens ein Bildbereich ausgewählt wird,
• bei dem Bildinformation aus jedem ausgewählten Bildbereich mit einer Zuordnungsinformation (B(i, x, y)), mit der eine Zuordnung des jeweiligen Bildbereichs zu dem entsprechenden Bild und zu der Position des Bildbereichs innerhalb des Bildes möglich ist, gespeichert wird,
• bei dem aus der Bildinformation aus den gespeicherten ausgewählten Bildbereichen mindestens ein Mischbild (109) gebildet wird unter Berücksichtigung der jeweiligen Zuordnungsinformation (B(i, x, y)),
• bei dem die Zuordnungsinformationen einer Einheit zur Decodierung zugeführt werden,
• bei dem das Mischbild (109) im Rahmen einer Bewegungsschätzung, einer Bewegungskompensation oder einer Fehlerverdeckung für ein Bild verwendet wird.

2. Verfahren nach Anspruch 1,
bei dem ein Bildbereich ausgewählt wird, wenn die Bildinformation in dem entsprechenden Bildbereich hinsichtlich eines vorgegebenen Kriteriums zur Bewegungsschätzung zweier zeitlich aufeinanderfolgender Bilder (F(n-k)) erfüllt.

3. Verfahren nach Anspruch 1 oder 2,
bei dem aus mehreren aufeinanderfolgenden zeitlich vorangegangenen Bildern (F(n-k)) Bildbereiche ausgewählt und gespeichert werden.

4. Verfahren nach einem der Ansprüche 1 bis 3,
bei dem die Bildinformation in einer Ringspeicherstruktur (222) gespeichert wird.

5. Verfahren nach einem der Ansprüche 1 bis 4,
bei dem auf das mindestens eine Mischbild (109) bezüglich des Bildes eine Bewegungsschätzung durchgeführt wird.

6. Verfahren nach Anspruch 5,
• bei dem mehrere Mischbilder (109) aus der Bildinfomation aus Bildbereichen mehrerer zeitlich vorangegangener Bilder (F(n-k)) gebildet werden,
• bei dem für jedes Mischbild (109) eine Bewegungsschätzung bezüglich des Bildes durchgeführt wird,
• bei dem das Mischbild (109) ausgewählt wird, für das die Bewegungsschätzung bezüglich eines vorgegebenen Kriteriums ein bestes Ergebnis ergibt,
• bei dem für die Bildbereiche des ausgewählten Mischbildes (109) Bewegungsvektoren gebildet werden.

7. Verfahren nach Anspruch 6,
bei dem die Mischbilder (109) iterativ für jedes berücksichtigte zeitlich vorangegangene Bild (F(n-k)) sukzessive ausgehend von dem Bild, für das eine Weiterverarbeitung vorgesehen ist, gebildet werden.

8. Verfahren nach Anspruch 6 oder 7,
bei dem die Mischbilder (109) sukzessive auf folgende Weise gebildet werden:
• die gespeicherte Bildinformation jeweils eines zeitlich vorangegangenen Bildes (F(n-k)) wird in ein Mischbild (109) kopiert,
• das sich ergebende Mischbild (109) wird gespeichert,
• die gespeicherte Bildinformation jeweils eines zeitlich weiter vorangegangenen Bildes (F(n-k)) wird in das sich in dem vorangegangen Schritt ergebende Mischbild (109) kopiert,
• das Verfahren wird für jedes zu bildende Mischbild sukzessive weitergeführt, bis alle zeitlich vorangegangenen Bilder (F(n-k)) berücksichtigt worden sind.

9. Verfahren nach einem der Ansprüche 1 bis 8,
bei dem der Bildbereich
• ein Bildobjekt vorgebbarer Form ist, und/oder
• ein Makroblock ist, und/oder
• ein Bildblock (107) ist.

10. Verwendung eines Verfahrens nach einem der Ansprüche 1 bis 9,
• bei der Bildtelefonie, oder
• im digitalen Fernsehen, oder
• im HDTV,
• im Internet-Video-Streaming,
• im Video on Demand,
• im Business Fernsehen,
• im Internet Fernsehen.

11. Verfahren nach einem der Ansprüche 1 bis 9,
bei dem die Bildinformation aus jedem ausgewählten Bildbereich und/oder die zugehörige Zuordnungsinformation (B(i, x, y)) vor dem Speichern komprimiert wird/werden.

12. Vorrichtung zum Speichern und Bearbeiten von Bildinformation zeitlich aufeinanderfolgender Bilder (101, ..., 105), die derart eingerichtet ist, dass folgende Schritte durchgeführt werden:
• aus jedem berücksichtigten zeitlich vorangegangenen Bild (F(n-k)) wird jeweils mindestens ein Bildbereich ausgewählt,
• Bildinformation aus jedem ausgewählte Bildbereich wird mit einer Zuordnungsinformation (B(i, x, y)), mit der eine Zuordnung des jeweiligen Bildbereichs zu dem entsprechenden Bild und zu der Position des Bildbereichs innerhalb des Bildes möglich ist, gespeichert,
• aus der Bildinformation wird aus den gespeicherten ausgewählten Bildbereichen mindestens ein Mischbild (109) gebildet unter Berücksichtigung der jeweiligen Zuordnungsinformation (B (i, x, y)),
• bei dem die Zuordnungsinformationen einer Einheit zur Decodierung zugeführt werden,
• das Mischbild (109) wird im Rahmen einer Bewegungsschätzung, einer Bewegungskompensation oder einer Fehlerverdeckung für ein Bild verwendet.

13. Computerlesbares Speichermedium, in dem ein Computerprogramm zum Speichern und Bearbeiten von Bildinformation zeitlich aufeinanderfolgender Bilder (101, ..., 105) gespeichert ist, das, wenn es ausgeführt wird, folgende Verfahrensschritte aufweist:
• aus jedem berücksichtigten zeitlich vorangegangenen Bild (F(n-k)) wird jeweils mindestens ein Bildbereich ausgewählt,
• Bildinformation aus jedem ausgewählte Bildbereich wird mit einer Zuordnungsinformation (B(i, x, y)), mit der eine Zuordnung des jeweiligen Bildbereichs zu dem entsprechenden Bild und zu der Position des Bildbereichs innerhalb des Bildes möglich ist, gespeichert,
• aus der Bildinformation wird aus den gespeicherten ausgewählten Bildbereichen mindestens ein Mischbild (109) gebildet unter Berücksichtigung der jeweiligen Zuordnungsinformation (B(i, x, y)),
• bei dem die Zuordnungsinformationen einer Einheit zur Decodierung zugeführt werden,
• das Mischbild (109) wird im Rahmen einer Bewegungsschätzung, einer Bewegungskompensation oder einer Fehlerverdeckung für ein Bild verwendet.

14. Computerprogramm-Element zum Speichern und Bearbeiten von Bildinformation zeitlich aufeinanderfolgender Bilder (101, ..., 105), das, wenn es ausgeführt wird, folgende Verfahrensschritte aufweist:
• aus jedem berücksichtigten zeitlich vorangegangenen Bild (F(n-k)) wird jeweils mindestens ein Bildbereich ausgewählt,
• Bildinformation aus jedem ausgewählte Bildbereich wird mit einer Zuordnungsinformation (B(i, x, y)), mit der eine Zuordnung des jeweiligen Bildbereichs zu dem entsprechenden Bild und zu der Position des Bildbereichs innerhalb des Bildes möglich ist, gespeichert,
• aus der Bildinformation wird aus den gespeicherten ausgewählten Bildbereichen mindestens ein Mischbild (109) gebildet unter Berücksichtigung der jeweiligen Zuordnungsinformation (B(i, x, y)),
• bei dem die Zuordnungsinformationen einer Einheit zur Decodierung zugeführt werden,
• das Mischbild (109) wird im Rahmen einer Bewegungsschät zung, einer Bewegungskompensation oder einer Fehlerverdeckung für ein Bild verwendet.

## Claims

1. Method for storing and processing picture information of temporally successive pictures (101,...,105),
• in which in each case at least one picture area is selected from each temporally preceding picture (F(n-k)) taken into account,
• in which picture information from each selected picture area is stored with an assignment information item (B(I,x,y)), which enables an assignment of the respective picture area to the corresponding picture and to the position of the picture area within the picture,
• in which at least one mixed picture (109) is formed from the picture information from the stored selected picture areas, with the respective assignment information (B(I,x,y))being taken into account,
• in which the assignement information items are fed to a unit for decoding,
• in which the mixed picture (109) is used in the context of a motion estimation, a motion compensation or an error concealment for a picture.

2. Method according to Claim 1,
in which a picture area is selected if the picture information in the corresponding picture area satisfies with regard to a predetermined criterion for motion estimation of two temporally successive pictures (F(n-k)).

3. Method according to Claim 1 or 2,
in which picture areas are selected from a plurality of successive temporally preceding pictures (F(n-k)) and stored.

4. Method according to one of Claims 1 to 3,
in which the picture information is stored in a ring memory structure.

5. Method according to one of Claims 1 to 4,
in which a motion estimation is carried out on the at least one mixed picture (109) with regard to the picture.

6. Method according to Claim 5,
• in which a plurality of mixed pictures (109) are formed from the picture information from picture areas of a plurality of temporally preceding pictures (F(n-k)),
• in which, for each mixed picture (109), a motion estimation is carried out with regard to the picture,
• in which the mixed picture (109) is selected for which the motion estimation yields a best result with regard to a predetermined criterion,
• in which motion vectors are formed for the picture areas of the selected mixed picture (109).

7. Method according to Claim 6,
in which the mixed pictures (109) are- formed iteratively for each temporally preceding picture (F(n-k)) taken into account progressively proceeding from the picture for which further processing is provided.

8. Method according to Claim 6 or 7,
in which the mixed pictures (109) are formed progressively in the following manner:
• the stored picture information of a respective temporally preceding picture (F(n-k)) is copied into a mixed picture (109),
• the resulting mixed picture (109) is stored,
• the stored picture information of a respective temporally further preceding picture (109) is copied into the mixed picture (109) resulting in the preceding step,
• the method is continued progressively for each mixed picture to be formed until all the temporally preceding pictures (F(n-k)) have been taken into account.

9. Method according to one of Claims 1 to 8,
in which the picture area
• is a picture object of predeterminable form, and/or
• is a macroblock, and/or
• is a picture block (107).

10. Use of a method according to one of Claims 1 to 9,
• in video telephony, or
• in digital television, or
• in HDTV,
• in Internet video streaming,
• in video on demand,
• in business television,
• in Internet television.

11. Method according to one of Claims 1 to 9,
in which the picture information from each selected picture area and/or the associated assignment information (B(i,x,y)) is/are compressed prior to storage.

12. Device for storing and processing picture information of temporally successive pictures (101,...,105), which is set up in such a way that the following steps are carried out:
• in each case at least one picture area is selected from each temporally preceding picture (F(n-k)) taken into account,
• picture information from each selected picture area is stored with an assignment information item (B(I,x,y)), which enables an assignment of the respective picture area to the corresponding picture and to the position of the picture area within the picture,
• at least one mixed picture (109) is formed from the picture information from the stored selected picture areas, with the respective assignment information (V(I,x,y))being taken into account,
• in which the assignement information items are fed to a unit for decoding.
• the mixed picture (109) is used in the context of a motion estimation, a motion compensation or an error concealment for a picture.

13. Computer-readable storage medium, in which a computer program for storing and processing picture information of temporally successive pictures (101,...,105 is stored, which, if it is executed, has the following method steps:
• in each case at least one picture area is selected from each temporally preceding picture (F(n-k)) taken into account,
• picture information from each selected picture area is stored with an assignment information item (B(i,x,y)), which enables an assignment of the respective picture area to the corresponding picture and to the position of the picture area within the picture,
• at least one mixed picture (109) is formed from the picture information from the stored selected picture areas, with the respective assignment information (B(i,x,y)) being taken into account,
• in which the assignement information items are fed to a unit for decoding,
• the mixed picture (109) is used in the context of a motion estimation, a motion compensation or an error concealment for a picture.

14. Computer program element for storing and processing picture information of temporally successive pictures (101,...,105), which, if it is executed, has the following method steps:
• in each case at least one picture area is selected from each temporally preceding picture (F(n-k)) taken into account,
• picture information from each selected picture area is stored with an assignment information (B(I,x,y)) item, which enables an assignment of the respective picture area to the corresponding picture and to the position of the picture area within the picture,
• at least one mixed picture (109) is formed from the picture information from the stored selected picture areas, with the respective assignment information (B(I,x,y)) being taken into account,
• in which the assignement information items are fed to a unit for decoding.
• the mixed picture 109 is used in the context of a motion estimation, a motion compensation or an error concealment for a picture.

## Revendications

1. Procédé de mise en mémoire et de traitement d'une information d'image concernant des images successives dans le temps (101, ..., 105), dans lequel
• respectivement au moins une zone d'image est sélectionnée dans chaque image (F(n-k)) prise en compte qui a précédé dans le temps;
• une information d'image tirée de chaque zone d'image sélectionnée est mise en mémoire avec une information d'affectation (B(i, x, y)) avec laquelle une affectation de la zone d'image respective à l'image correspondante et à la position de la zone d'image à l'intérieur de l'image est possible;
• au départ de l'information d'image, au moins une image mixte (109) est constituée au départ tirée des zones d'image sélectionnées mises en mémoire, compte tenu de l'information d'affectation respective (B(i, x, y));
• les informations d'affectation sont amenées à une unité de décodage;
• l'image mixte (109) est utilisée dans le cadre d'une estimation de mouvement, d'une compensation de mouvement ou d'un masquage d'erreur pour une image.

2. Procédé selon la revendication 1, dans lequel une zone d'image est sélectionnée si l'information d'image, dans la zone d'image correspondante, remplit un critère donné d'estimation de mouvement de deux images successives dans le temps (F(n-k)).

3. Procédé selon la revendication 1 ou 2, dans lequel des zones d'image sont sélectionnées dans plusieurs images successives qui ont précédé dans le temps (F(n-k)), et mises en mémoire.

4. Procédé selon l'une des revendications 1 à 3, dans lequel l'information d'image est mise en mémoire dans une structure de mémoire annulaire (222).

5. Procédé selon l'une des revendications 1 à 4, dans lequel une estimation de mouvement est effectuée sur l'au moins une image mixte (109) relativement à l'image.

6. Procédé selon la revendication 5, dans lequel
• plusieurs images mixtes (109) sont constituées au départ de l'information d'image sur la base de zones d'image de plusieurs images qui ont précédé dans le temps (F(n-k));
• une estimation de mouvement est effectuée pour chaque image mixte (109) relativement à l'image;
• l'image mixte (109) est sélectionnée pour laquelle l'estimation de mouvement, par rapport à un critère donné, fournit un résultat qui est le meilleur;
• des vecteurs de mouvement sont constitués pour les zones d'image de l'image mixte (109) sélectionnée.

7. Procédé selon la revendication 6, dans lequel, partant de l'image pour laquelle est prévue la suite du traitement, les images mixtes (109) sont constituées successivement par itération pour chaque image prise en compte qui a précédé dans le temps (F(n-k)).

8. Procédé selon la revendication 6 ou 7, dans lequel les images mixtes (109) sont constituées successivement de la manière suivante:
• l'information d'image enregistrée ayant respectivement pour objet une image qui a précédé dans le temps (F(n-k)) est copiée dans une image mixte (109);
• l'image mixte (109) qui en résulte est mise en mémoire;
• l'information d'image mise en mémoire, ayant respectivement pour objet une image qui a encore précédé dans le temps (F(n-k)), est copiée dans l'image mixte (109) obtenue à l'étape précédente;
• ce procédé se poursuit successivement pour chaque image mixte à constituer jusqu'à ce que toutes les images qui ont précédé dans le temps (F(n-k)) aient été prises en compte.

9. Procédé selon l'une des revendications 1 à 8, dans lequel la zone d'image est
• un objet d'image de forme prédéterminable et/ou
• un macro-bloc et/ou
• un bloc d'image (107).

10. Utilisation d'un procédé selon l'une des revendications 1 à 9
• dans la visiotéléphonie ou
• dans la télévision numérique ou dans
• la HDTV,
• dans l'«Internet Video Streaming»,
• dans le domaine du «vidéo à la demande» (Video on Demand),
• dans la «Business Television»
• dans la télévision intemet (Internet Television).

11. Procédé selon l'une des revendications 1 à 9, dans lequel l'information d'image tirée de chaque zone d'image sélectionnée et/ou l'information d'affectation associée (B(i, x, y)) est / sont comprimée(s) avant la mise en mémoire.

12. Dispositif de mise en mémoire et de traitement d'une information d'image concernant des images successives dans le temps (101, ..., 105), lequel est aménagé de manière à permettre l'exécution des étapes suivantes:
• respectivement au moins une zone d'image est sélectionnée dans chaque image (F(n-k)) prise en compte qui a précédé dans le temps;
• une information d'image tirée de chaque zone d'image sélectionnée est mise en mémoire avec une information d'affectation (B(i, x, y)) permettant une affectation de la zone d'image respective à l'image correspondante et à la position de la zone d'image à l'intérieur de l'image;
• au départ de l'information d'image, au moins une image mixte (109) est constituée au départ des zones d'image sélectionnées mises en mémoire, compte tenu de l'information d'affectation respective (B(i, x, y));
• les informations d'affectation sont amenées à une unité de décodage;
• l'image mixte (109) est utilisée dans le cadre d'une estimation de mouvement, d'une compensation de mouvement ou d'un masquage d'erreur pour une image.

13. Support de mémoire lisible par ordinateur, dans lequel est enregistré un programme d'ordinateur pour la mise en mémoire et le traitement d'une information d'image concernant des images successives dans le temps (101, ..., 105), lequel présente, lors de son exécution, les étapes de procédé suivantes:
• respectivement au moins une zone d'image est sélectionnée dans chaque image (F(n-k)) prise en compte qui a précédé dans le temps;
• une information d'image tirée de chaque zone d'image sélectionnée est mise en mémoire avec une information d'affectation (B(i, x, y)) permettant une affectation de la zone d'image respective à l'image correspondante et à la position de la zone d'image à l'intérieur de l'image;
• au départ de l'information d'image, au moins une image mixte (109) est constituée au départ des zones d'image sélectionnées mises en mémoire, compte tenu de l'information d'affectation respective (B(i, x, y));
• les informations d'affectation sont amenées à une unité de décodage;
• l'image mixte (109) est utilisée dans le cadre d'une estimation de mouvement, d'une compensation de mouvement ou d'un masquage d'erreur pour une image.

14. Élément de programme d'ordinateur pour la mise en mémoire et le traitement d'une information d'image concernant des images successives dans le temps (101, ..., 105), lequel présente, lors de son exécution, les étapes de procédé suivantes:
• respectivement au moins une zone d'image est sélectionnée dans chaque image (F(n-k)) prise en compte qui a précédé dans le temps;
• une information d'image tirée de chaque zone d'image sélectionnée est mise en mémoire avec une information d'affectation (B(i, x, y)) permettant une affectation de la zone d'image respective à l'image correspondante et à la position de la zone d'image à l'intérieur de l'image;
• au départ de l'information d'image, au moins une image mixte (109) est constituée au départ des zones d'image sélectionnées mises en mémoire, compte tenu de l'information d'affectation respective (B(i, x, y));
• les informations d'affectation sont amenées à une unité de décodage;
• l'image mixte (109) est utilisée dans le cadre d'une estimation de mouvement, d'une compensation de mouvement ou d'un masquage d'erreur pour une image.
